(19) Europäisches Patentamt
European Patent Office
Office européen des brevets

(11) **EP 2 269 907 A2**

(12) **EUROPEAN PATENT APPLICATION**

(43) Date of publication:
**05.01.2011 Bulletin 2011/01**

(51) Int Cl.:
***B62M 6/50*** *(2010.01)*

(21) Application number: **10251170.6**

(22) Date of filing: **29.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **02.07.2009 AU 2009903110**
**20.07.2009 AU 2009100700**

(71) Applicant: **Nanocycle Pty Ltd.**
**Richmond, VIC 3121 (AU)**

(72) Inventor: **Gale, Stephen William**
**Richmond, VIC 3121 (AU)**

(74) Representative: **Turner, Richard Charles**
**29 Southcourt Avenue**
**Leighton Buzzard,**
**Bedforshire LU7 2QD (GB)**

(54) **Power assisted bicycle**

(57) A power assisted vehicle typically an electric bicycle (10) which has an electric motor (13) for providing power assistance to the bicycle and an accelerometer-based MEMS sensor (16) for sensing the pitch of the bicycle and a control system (14) for controlling the power supply to the electric motor (13) and thus the power assistance provided to the bicycle to assist the rider of the bicycle when the bicycle is being ridden up a slope or incline.

**FIG. 1**

EP 2 269 907 A2

**Description**

**Technical Field**

This invention relates to power assisted vehicles and in particular to vehicles of the type which use electrically powered motors to assist in the propulsion of the vehicle. More particularly, the present invention relates to electrically powered bicycles or other similar vehicles such as tricycles which are designed to be propelled by human power but which also include an electric motor to assist in the propulsion of the vehicle or to be a substitute for the normal rider propulsion of the bicycle.

**Background Art**

Motorized bicycles normally are designed to be pedalled by a rider and in addition include a small electric motor or internal combustion engine to assist in propelling the bicycle either when the rider is pedalling or not. Thus a bicycle can be propelled by the motor alone or only if the rider pedals as well. Most commonly, motorized bicycles include electric DC motors which are powered by batteries on the bicycle. Motorized bicycles however are also usually capable of being powered by pedals alone if required. Motorized bicycles are usually similar in design to normal unpowered bicycles so as to be of relatively light weight but have an arrangement for supporting the motor and batteries for the motor. Power can be supplied to assist in propulsion of the bicycle either continuously or under throttle control so that power assistance can be provided where required.

If however the motorized bicycle has a manual motor bike style throttle, it is common for most people using such a bicycle to use the throttle in one of two positions, either fully on or fully off. This tends to mean that they waste power unnecessarily on level terrain. As a result, the bicycle is required to carry a larger, heavier and more expensive battery than is actually required. Thus if the rider reverts to manual pedalling, the rider has to propel an increased load.

On ascending a hill the rider can use the throttle to control the power applied by the motor to increase the assistance provided by the electric motor however it is often difficult for the rider to control that power efficiently. One system aimed at varying the output of the motor for assistance in climbing a hill to increase efficient use of the power provided by the motor uses a strain gauge device to determine the torque applied by the rider to the back wheel. This type of system however does not actually sense the effort needed to ascend the hill and requires a relatively delicate component to be placed in a vulnerable location on the bicycle rear wheel. In addition this type of system is difficult to retrofit to existing bicycle frames as the sensor is required to be mounted "in series" with the hub sprocket of the rear wheels.

It would be desirable if a power assisted vehicle such as a bicycle was available which used an electric motor and which more efficiently made use of the available energy from the battery which powers the motor. It would be further desirable to have a power assisted vehicle in which power assistance provided by the motor is adjusted automatically

**Summary of the Invention**

The present invention provides in one aspect although not necessarily the broadest aspect, a control system for a power assisted vehicle having an electric motor **characterised in that** said control system includes an accelerometer-based sensor for sensing the pitch of said vehicle, said control system being adapted to control the power supplied to said motor and therefore the power assistance provided to said vehicle by said electric motor in accordance with the pitch of said vehicle as sensed by said sensor.

The term "power assisted vehicle" as used herein includes a vehicle which can be powered by human input such as a bicycle or a tricycle which is powered by being ridden by a rider pedalling and which includes a motor to assist in or provide the sole or primary power for propelling the vehicle.

The term "pitch" as used herein comprises the inclination of a substantially upright vehicle in the fore and aft direction and may be positive or negative depending upon whether the vehicle is travelling up a slope or incline or down a slope or incline.

Preferably the power input required to be supplied the motor to assist movement of the vehicle for example up an incline or slope is calculated or determined from the output signal/s from the sensor and the control system includes means for comparing the power drawn by the motor with the calculated or determined power input required. Preferably the comparison provides an error signal for adjusting the power supplied to the motor. Preferably the control system includes a motor controller which receives the error signal and varies the power supplied to the motor in accordance with the error signal.

Preferably the control system includes means for filtering and processing the output signal/s from the sensor to remove vibration signals due to rough terrain or the rider's body movement. Preferably the output from the filtering and processing means comprising the filtered and processed output signal/s from the sensor is scaled to provide a measurement of the power required to be applied by the motor which is in proportion to the incline or slope upon which the vehicle is travelling. Preferably the scaling of the filtered and processed output signal/s from the sensor is undertaken by a scaler which applies a constant gain term to the output signals from the filtering and processing means for application as an input to the comparing means for comparison with the power drawn by said motor to provide the error signal. The constant gain term may be varied depending upon the weight of the vehicle and/or weight of the rider of the vehicle. The gain term may also be varied in accordance with the intended speed of the vehicle and/or efficiency of the motor.

Preferably an offset is provided to the motor controller whereby power may be supplied to the motor to provide power assistance to the vehicle when it is not travelling up an incline or slope.

The accelerometer-based sensor typically comprises a miniature micro-electrical mechanical system sensor or "MEMS sensor" which is a solid state accelerometer based sensor which can sense an inclination or tilt.

In another preferred aspect, the present invention provides a power assisted vehicle characterised by a control system as described above. Preferably the vehicle is one which can be propelled by manual input. The control system may include a manual input sensor which senses manual propulsion input to the vehicle and the control system controls the supply of power to the motor in accordance with the output of the manual input sensor. Preferably the control system only provides power to the motor when there is manual propulsion input to the vehicle.

Most preferably the vehicle is a bicycle or tricycle having pedals and a pedaling sensor is provided to sense when the bicycle or tricycle is being pedaled. Preferably the motor controller only provides power to the motor when the pedaling sensor senses that the pedals are being pedaled.

The power supply for the motor usually comprises a battery. The power supplied to the motor from the battery that is the voltage and the current is automatically regulated by the control system such that with a constant manual effort, the vehicle will maintain an acceptable speed irrespective of terrain. Thus in the case of a bicycle, a constant effort from the rider will ensure the bicycle maintains an acceptable speed irrespective or terrain A power assisted bicycle of this type will therefore not require a manual throttle and will achieve maximum and consistent utilisation of a given battery's capacity. As current drawn by the motor varies in accordance with the load on the motor, power supply to the motor is effectively controlled by controlling the voltage applied to the motor.

In another aspect, the present invention provides a method of providing power assistance to a vehicle having a power assistance electric motor characterised by the steps of sensing the pitch of said vehicle using an accelerometer-based sensor and controlling the power supplied to said motor and therefore the power assistance provided to said vehicle by said electric motor in accordance with the pitch of said vehicle as sensed by said sensor.

Preferably the method is further characterised by the step of comparing the power drawn by the motor with the power input required to be supplied to the motor determined from an output signal or signals from said sensor to provide an error signal which governs the supply of power to said motor.

Preferably the method is further characterised by the step of scaling the output signal or signals from the sensor in accordance with one or more of the weight of the vehicle, the weight of the rider of the vehicle, the intended speed of the vehicle and efficiency of the motor.

Preferably the method is further characterised by sensing manual propulsion input to the vehicle and controlling the supply of power to said motor in accordance with the sensed manual input.

**Brief Description of the Drawings**

Reference will now be made to the accompanying drawings which illustrate a preferred embodiment of the invention. The invention has been described in relation to a bicycle however it will be appreciated that the invention may be applied to other manually pedalled or propelled vehicles and thus the following description is not to be considered as being limiting on the scope of the invention. In the drawings:

Fig. 1 illustrates schematically a power assisted bicycle incorporating a control system according to an embodiment of the invention; and
Fig. 2 illustrates in block diagram form the control system for the power assisted bicycle of Fig. 1.

**Detailed Description of the Preferred Embodiment**

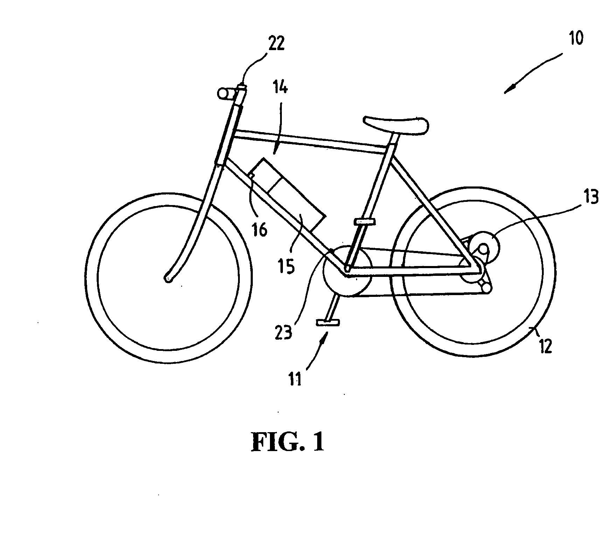

Referring to the drawings and firstly to Fig. 1 there is illustrated a typical power assisted bicycle 10 provided with a pedalling assembly 11 through which a manually provided pedalling power or force can be transmitted to the rear wheel 12 of the bicycle 10 to propel the bicycle 10. The bicycle 10 also includes an electric motor 13 for providing motive power assistance to the bicycle 10, the electric motor 13 typically being a brushless DC motor and being mounted by a suitable mounting or bracket on the rear forks of the bicycle 10, the motor 13 being coupled to the rear wheel 12 through any suitable transmission for example a belt or chain transmission for transmission of motive power to the rear wheel 12.

It will be appreciated that the bicycle 10 may be of many different designs other than that illustrated and may have either its rear wheel or front wheel equipped with the motor 13 for providing power assistance to the bicycle 10. The motor 13 may be mounted to the front or rear forks of the bicycle 10, may be a hub mounted motor or be capable of driving the front and/or rear wheels through any suitable transmission to assist in or provide at least part of the driving power for propulsion of the bicycle 10.

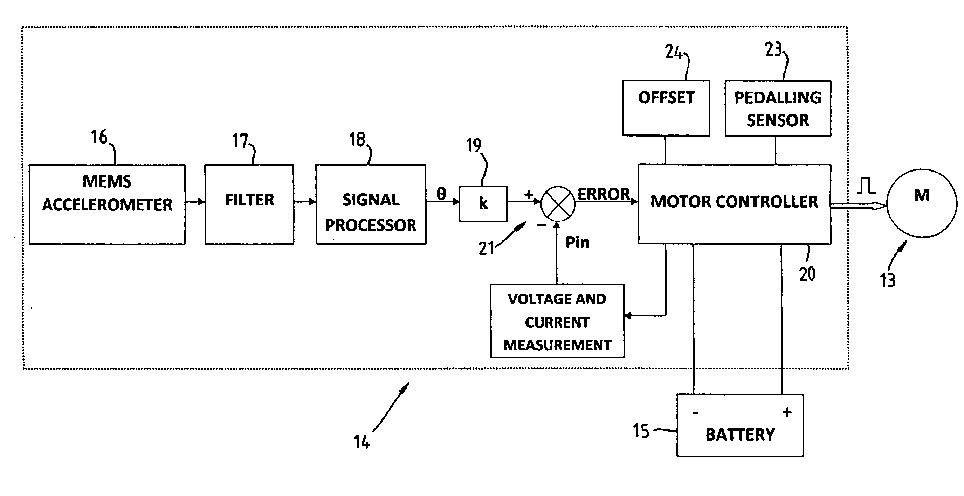

The bicycle 10 in accordance with an embodiment of the present invention is provided with a control system 14 for controlling the supply of power from a battery 15 mounted on the bicycle frame to the electric motor 13. The control system 14 includes as shown in block diagram of Fig. 2, a MEMS (Micro-Electro-Mechanical Systems) sensor 16 (or other accelerometer-based sensor) which in this embodiment functions as an incline or pitch sensor and which is mounted at any suitable location on the bicycle 10. In this embodiment the sensor 16 is incorporated in and is part of the control system 14 but may be separate from the control system 14. The sensor 16 is used to sense the angle of inclination of an upright bicycle 10 in the fore-and-aft direction so as to detect when the bicycle is travelling up or down a slope or hill or when it is travelling on a level area or road. The sensor 16 provides an output in the form of analogue or digital signals which describe or define the direction and magnitude of the gravitational force applied to the sensor 16 and thus inclination. Whilst the sensor 16 may be a single axis sensor, it is preferred that the sensor 16 be a two- or three-axis device to achieve the accuracy required and to allow a software zero calibration rather than a hardware adjustment.

The control system 14 further includes a signal filter 17 for filtering the group of signals from the sensor 16 by digital or analogue means to remove any short vibrations due to rough terrain or the rider's body movement. The resultant output signals from the filter 17 are processed in a signal processor 18 with scaling and offsets, to provide an output term representing the bicycle's angle of inclination "$\theta$".

The power required to raise a mass up an incline or slope is in direct proportion to inclination angle (for a constant mass and velocity). If the output power provided by the electric motor 13 is regulated according to the function $P = k \cdot \theta$, it is possible for a rider of the bicycle 10 to ascend a hill or incline without providing any additional pedalling power.

For small angles of inclination (<10 degrees), the power P required to raise a bicycle and rider of mass M up a slope of angle $\theta$ at a speed "v" is given by the equation:

$$Pout = k . \theta . M . v$$

If the speed "v" is chosen to be a comfortable speed, say 15km/hr and the average mass "M" of the bicycle and rider is 100kg, then the equation reduces to approximately:

$$Pout = 68 \times \theta \quad \text{where } Pout = \text{motor output power(w) and}$$

$$\theta = \text{inclination (degrees)}$$

If the efficiency of the motor is approximately 75%, then the equation describing the input power to the motor becomes approximately:

$$Pin = 91 \times \theta \text{ with the figure "91" representing the gain term "k".}$$

Other gain terms may be established using the above equation to accommodate different rider and bicycle weights, different intended cycling speeds or different motor efficiencies.

In practice it has been found that providing 80w of power per degree of inclination is sufficient for most riders between 60 to 90kg on a 20kg bike. This will enable a bicycle to ascend most hills at about 15km/hr without the rider providing any further effort than they would have applied on a level road.

Thus to control the electric power assistance motor 13 of the bicycle 10 in accordance with the above equation, the control system has a scaler 19 which scales the angle of inclination $\theta$ by the gain term "k" and which provides an output which is the input power required to be supply to the motor 13 for the motor 13 to provide the required power assistance for any degree of inclination or slope encountered by the bicycle 10. For use of the calculated output from the scaler 19, the control system 10 includes a motor controller 20 which by pulse width modulation controls the supply of power from the battery 15 to the motor 13. The controller 20 is arranged in a control loop with a comparator 21 which compares the actual power drawn by the motor 13 with the required power input to the motor 13 as calculated by the scaler 19. For this comparison, the motor controller 20 determines the actual power drawn by the bicycles motor 13 by measuring both the voltage and current. The product of the voltage and current is the actual power used by the motor 13 and comprising a first input (Pin) to the comparator 21. The comparator 21 also receives a second input from the scaler 19 which is the scaled output referred to above which is proportional to the angle of inclination of the bicycle 10. The comparator 21 provides an output which comprises a comparison of the inputs from the motor controller 20 and scaler 19. This output is an error signal which is applied to the motor controller 20. The motor controller 20 adjusts the power supplied to the motor 13 from the battery 15 in accordance with the error signal to thereby control the commanded rotational velocity of the motor 13. Control of power supply to the motor 13 from the motor controller 20 is achieved by altering the width of the voltage pulses of the pulse width modulated signal applied to the motor 13 in accordance with the error signal from the comparator 21.

Different gain terms "k" calculated in accordance with the size of the motor 13, the bicycle 10 and rider weights and intended cycling speeds may be software programmed into the scaler 19 of the control system 14 if necessary.

For activating and deactivating the system 14, the bicycle 10 is equipped with a master control on-off switch 22 typically provided on the handlebars of the bicycle 10 (see Fig. 1). The control system 14 also includes a pedaling sensor 23 which is connected to the motor controller 20 and which detects the movement of the pedals 11 and which provides an input to the motor controller 20. If the pedaling sensor 23 sensors that the rider is attempting to stop or slow down by for example the rider pedaling at less than the speed at which the bicycle 10 is moving, the motor controller 20 will stop power supply to the motor 13. This also further removes the need for the rider to switch the motor 13 or control system 14 on or off when at traffic lights or approaching obstacles. The pedaling sensor 23 also allows the rider to coast without accelerating.

When the bicycle 10 is being ridden on a level or flat road or path without any incline, there will be no an error signal from the scaler 19. So that power can also be applied by the motor 13 in these circumstances, the motor controller 20 has an input which can receive an offset signal 24. When an offset signal 24 is applied to the input, the motor controller 20 will provide power to the motor 13. This will thus enable a rider of the bicycle 10 to gain power assistance from the motor 13 on flat roads or other level ground. Typically the offset 24 causes the motor controller 20 to supply a relatively low power to the motor 13 for example fifty (50) watts. The offset 24 may be selectively adjustable during riding of the bicycle 10 however it is preferred that the offset 24 is only changed in a set up mode of the bicycle 10.

The angle of inclination sensed by the MEMS sensor 16 may be an angle in opposite directions depending upon whether the bicycle 10 is travelling up a hill or slope or down a hill or on a down slope. The control system 14 interprets a downhill slope as a negative inclination and no inclination as a zero and accordingly causes the motor controller 20 to reduce power to the motor 13 to zero or to a low level where an offset is used as above.

The present invention thus provides a system 14 which enables the greatest use of the available energy from the battery 15 since riders do not input more power than is actually required on level ground

The control system 14 may be incorporated in new power assisted bicycles, tricycles or any other manually propelled vehicles or retrofitted into existing bicycles, tricycles or other vehicles. The control system may be embodied in a single Digital Signal Processor or formed by individual discrete components.

The terms "comprising" or "comprises" as used throughout the specification and claims are taken to specify the presence of the stated features, integers and components referred to but not preclude the presence or addition of one or more other feature/s, integer/s, component/s or group thereof.

Whilst the above has been given by way of illustrative embodiment of the invention, all such variations and modifications thereto as would be apparent to persons skilled in the art are deemed to fall within the broad scope and ambit of the invention as herein defined in the appended claims.

**Claims**

1. A control system (14) for a power assisted vehicle (10) having an electric motor (13) **characterised in that** said control system (14) includes an accelerometer-based sensor (16) for sensing the pitch of said vehicle (10), said control system (14) being adapted to control the power supplied to said motor (13) and therefore the power assistance provided to said vehicle (10) by said electric motor (13) in accordance with the pitch of said vehicle (10) as sensed by said sensor (16).

2. A control system (14) as claimed in claim 1 and **characterized by** a comparator (21) for comparing the power drawn by said motor (13) with the power input required to be supplied to the motor (13) determined from an output signal or signals from said sensor (16).

3. A control system (14) as claimed in claim 2 and **characterized by** a motor controller (20) and wherein said comparator (21) provides an error signal from said comparison, said motor controller (20) being adapted to vary the power supplied from a battery (15) to said motor (13) in accordance with said error signal.

4. A control system (14) as claimed in claim 3 **characterised by** means (19) for scaling said output signal or signals from said sensor (16) in accordance with one or more of the weight of the vehicle (10), the weight of the rider of the vehicle (10), the intended speed of the vehicle (10) and efficiency of the motor (13).

5. A control system (14) as claimed in claim 4 **characterised by** means (17,18) for filtering and processing said output signal or signals for filtering external vibration signals from said output signal or signals.

6. A control system (14) as claimed in any one of claims 3 to 5 **characterised in that** said motor controller (20) provides a pulse width modulated power signal to said motor (13) and wherein the pulse width of said signal is varied in accordance with said error signal.

7. A control system (14) as claimed in any one of claims 3 to 6 **characterised by** means (24) for providing an offset signal to said motor controller (20) whereby said motor controller (20) can apply power to said motor (13) when said vehicle is travelling on level ground as sensed by said sensor (16).

8. A control system (14) as claimed in claim 7 **characterised by** an input sensor (23) for sensing manual propulsion input to said vehicle (10) and wherein said motor controller (20) controls supply of power to said motor (13) in accordance with the output of said sensor (23).

9. A control system (14) as claimed in any one of the preceding claims **characterised in that** said accelerometer-based sensor (16) comprises a micro-electrical mechanical systems (MEMS) sensor.

10. A power assisted vehicle (10) **characterised by** a control system (14) as claimed in any one of the preceding claims.

11. A power assisted vehicle (10) as claimed in claim 10 **characterised in that** said vehicle comprises a bicycle or tricycle (10), said bicycle or tricycle (10) having at least a front wheel and a rear wheel (12), pedals (11) for application of a pedalling force to at least one of said wheels for manually propelling said bicycle or tricycle (10) and wherein said electric motor (13) is mounted on said bicycle or tricycle (10) for providing supplementary drive to at least one of said wheels.

12. A method of providing power assistance to a vehicle (10) having a power assistance electric motor (13) **characterised by** the steps of sensing the pitch of said vehicle (10) using an accelerometer-based sensor (16) and controlling the power supplied to said motor (13) and therefore the power assistance provided to said vehicle (10) by said electric motor (13) in accordance with the pitch of said vehicle (10) as sensed by said sensor (16).

13. A method as claimed in claim 12 **characterised by** comparing the power drawn by said motor (13) with the power input required to be supplied to the motor (13) determined from an output signal or signals from said sensor (16) to provide an error signal which governs the supply of power to said motor (13).

14. A method as claimed in claim 13 **characterised by** scaling the output signal or signals from said sensor (16) in accordance with one or more of the weight of the vehicle (10), the weight of the rider of the vehicle (10), the intended speed of the vehicle (10) and efficiency of the motor (13).

15. A method as claimed in any one of claims 12 to 14 **characterised by** the step of sensing manual propulsion input to said vehicle (10) and controlling the supply of power to said motor (13) in accordance with the sensed manual input.

**FIG. 1**

EP 2 269 907 A2